# EUROPEAN PATENT APPLICATION

(11) **EP 0 949 741 A2**
(43) Date of publication of application: **13.10.1999**
(21) Application number: 99650032.8
(22) Date of filing: 07.04.1999
(51) Int. Cl.: H02J 9/02

(54) **An emergency lighting network**

(30) Priority: 09.04.1998 IE 980276; 19.10.1998 IE 980865
(71) Applicant: Power Standby Systems Limited, Dun Laoghaire, County Dublin (IE)
(72) Inventor: Stack, Paul, c/o Ventilux Limited, Dun Laoghaire, County Dublin (IE); Walsh, Brendan, c/o Ventilux Limited, Dun Laoghaire, County Dublin (IE); Dunne, Alan, c/o PEI Technologies, Plassey, Limerick (IE); Conway, Paul, c/o Vitalograph Business Park, Ennis, County Clare (IE)
(74) Representative: Weldon, Michael James

(57) **Abstract**

An emergency lighting network (1) has a central controller (2) which is connected to 10 spurs 8, each of which can have up to 100 nodes. Each node is associated with a particular luminaire. Each node protects battery and lamp status using a light sensing resistor. Drive circuit status is detected by monitoring voltage across a status LED. The nodes process data locally and transmit only diagnostic data back to the central controller. This diagnostic data indicates what part of the luminaire is faulty.

## Description

The invention relates to an emergency lighting network.

Various developments have been made in providing for testing of emergency lighting luminaires. Such testing is very important to ensure that in the event of a power failure the back-up battery, drive circuit, and the lamp itself would be operational. Developments in this area are described in US4799039, US4945280, US4894601, US5154504, US5493272, DE4318364, DE3618790, and GB2074403. However, despite the developments described in the prior art documents, it is a highly specialised task to install a network which provides control of testing and to ensure that the tests are performed on a regular basis and that all information is clearly communicated to maintenance personnel. Another problem with existing systems is that of non-compatibility with different manufacturers' luminaires.

The invention is therefore directed towards providing an emergency lighting network which has the following advantages:-
allows simpler testing of luminaires,
is compatible with a wider range of different manufacturers' luminaires,
outputs easily-understood fault information for quick repair work, and
is simpler and easier to install.

According to the invention, there is provided an emergency lighting network comprising a central controller comprising a central processor, non volatile memory, and a user interface, and node at each of a plurality of luminaires, characterised in that,
the system further comprises a communication circuit connected to a plurality of network spurs,
each network spur comprises a plurality of nodes, each node being associated with a luminaire,
each node comprises a light sensor for sensing luminaire lamp light output, and a processor programmed to:-
   perform a lamp test by comparing a sensed light level with a lamp test threshold,
   perform a battery test by monitoring sensed light level over time as the luminaire battery is discharged across the lamp, and
   process test data and generate diagnostic data indicating lamp and battery status;
the central controller comprises a database storing luminaire and node identification, type, and network location data, and the central processor comprises means for outputting at the user interface diagnostic data indicating which luminaires are faulty and specifying if the lamp or the battery is faulty; and
the central controller comprises means for automatically activating the nodes to perform tests.

In one embodiment, each node comprise means for testing a lamp drive circuit, and the central processor comprises means for indicating such a fault in the diagnostic data. Preferably, said drive circuit test means comprises means for sensing voltage drop across a drive circuit status indicator.

In another embodiment, each node processor is programmed with self-commissioning routines for capturing test reference light values at installation.

In a further embodiment, the central processor is programmed to poll all nodes to check that all nodes and associated luminaires are active.

Preferably, each node further comprises a current sensor for monitoring lamp current supply in luminaires within which light sensing is not possible.

In another embodiment, each node comprises means for providing a local visual indication of luminaire status.

In a further embodiment, the communication circuit and the nodes comprise means for communicating according to a Controller Area Network (CAN) protocol with a direct addressing scheme.

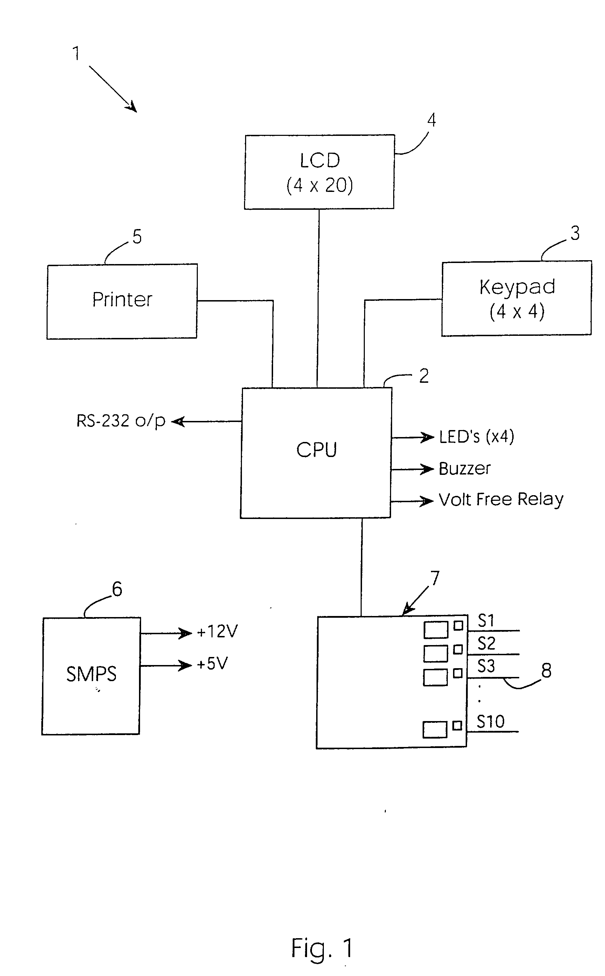

The invention will be more clearly understood from the following description of some embodiments thereof, given by way of example only with reference to the accompanying drawings in which:-
Fig. 1 is a diagrammatic view of an emergency lighting network of the invention;
Fig. 2 is a diagrammatic view showing the manner in which nodes are connected in the network; and
Fig. 3 is a diagram showing construction of a network node.

Referring to the drawings, there is shown an emergency lighting network 1. The network comprises a central controller having a CPU 2, a keypad 3, a liquid crystal display (LCD) 4, a printer 5, and a switch mode power supply (SMPS) 6 which provides 5V DC. In addition, the central controller comprises a communication circuit 7 connected to ten spurs 8, individually labelled S1, S2..... S10. Each spur 8 has a length of up to 1000m. The CPU 2 is connected to LEDS, a sound buzzer, and a volt-free relay.

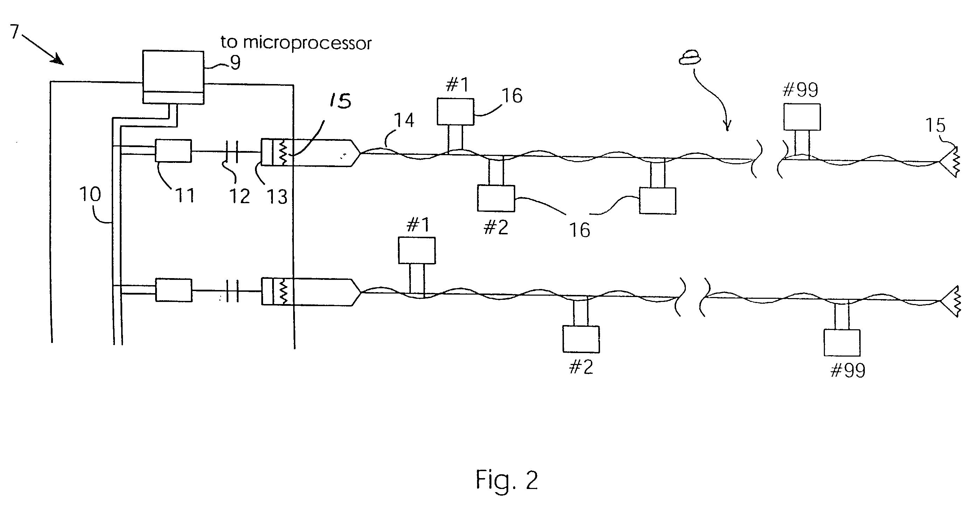

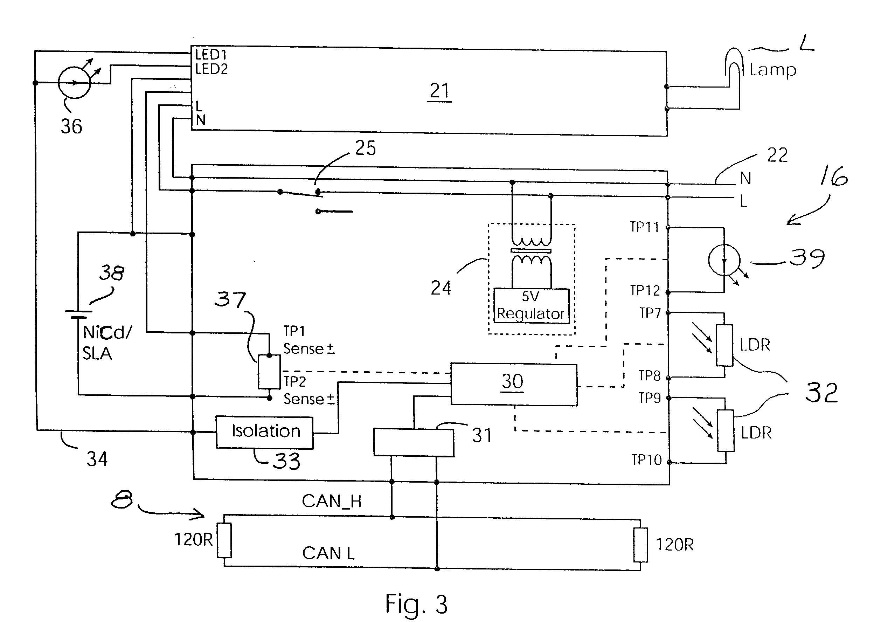

Referring now to Figs. 2 and 3, the communication circuit 7 comprises a microprocessor bus port 9 for connection to the CPU 2. A microprocessor bus 10 on the circuit 7 is connected to a Controller Area Network (CAN) controller 11, in turn connected to an isolator 12, which is in turn connected to a spur port 13. Each spur 8 comprises a multidrop bus having a two pair twisted cable and termination resistors 15. There is a series of up to 99 nodes 16 on each spur, providing a total of up to 1000 nodes for the full network 1.

Referring particularly to Fig. 3, the construction of a node 16 is now described in more detail. The node is connected to an associated luminaire having a lamp L driven by an inverter drive circuit 21. Power is supplied from a mains AC supply 22, a 5V regulator 24, and a relay switch 25. The relay switch 25 switches the mains supply between the inverter 21 and the node 16.

The nodes 16 further comprises a microprocessor 30 connected via a transceiver 31 to the spur 8. Two light dependent resistors (LDRs) 32 are connected to the microprocessor 30. Also, the microprocessor 30 is connected via an isolation circuit 33 and a voltage pin 34 to sense voltage across an LED 36 of the inverter drive 21. The LED 36 is required by the regulations in many countries as an indicator of drive circuit status.

In addition, the node 16 comprises a current-sensing resistor 37 which is connected in series with the output lamp to sense the current which is drawn from it during operation. Finally, the node 16 comprises an LED 39 for indicating test status.

In operation, the network 1 may be installed for use with a very wide variety of different types of luminaries. The fact that there are multiple spurs allows many different configurations in a building. Also, these spurs and the fact that up to about 100 nodes may be connected to each spur allow a very large number of nodes to be connected in the network. Communication is performed according to the Controller Area Network (CAN) protocol. This protocol provides the data link and physical layer capability for placing messages on the spurs 8. In addition, the CPU 2 and the nodes 16 operate according to a CSMA/CD arbitration scheme in which each node 16 has an address. Signals are broadcast by the CPU 2 via the relevant CAN controller 11 so that all nodes read the addresses and the addressee nodes read the instructions. The CPU 2 reads all signals placed on the bus 10, the node's transceiver initially checking for the re-set pattern. The nodes include an identifier based on their unique address in return signals to the CPU 2.

The baud rate for communication on the spurs 8 is 20 kb/s. The input impedance of the transceiver 31 is greater than 20,000 Ohms and the cable 14 has a minimum gauge of 16 AWG. This baud rate helps to minimise transmission delays and the transceiver impedance minimises voltage loss at the nodes. Also, the cable type ensures a low cable resistance. For these reasons, the spur length may be up to 1,000m and there may be up to 100 nodes per spur.

In more detail, the CPU 2 is an embedded controller card based around an 8-bit microcontroller. The card is programmed using the FORTH language and the application software, as well as all the FORTH libraries / sub-routines, are programmed into an EPROM and installed in a socket on the PCB. Data integrity is ensured by means of 8 non-volatile serial E²PROMs, located on a main PCB. In addition a RTC (Real Time Clock) facility is implemented by the addition of a 'Smartwatch' socket under the application EPROM. The FORTH libraries include drivers for the LCD (4x20 character), printer, RTC, EEPROM, keypad, serial port. The data / address buses, control signals, I/O pins and interrupt lines are all made available via connectors on the card, which make it simple to add additional circuitry.

On the communication circuit 7, the CAN bus interface is configured in an 8-bit non-multiplexed synchronous mode. The CAN controllers are set up for a bit rate of 12.5 Kbits/sec. Standard 11-bit identifiers are enabled and the mask / arbitration registers are set to receive all messages on the bus.

The port transceivers 13 are isolated from the CAN controllers, and thus ultimately from the rest of the control panel circuitry, via opto-isolators 12 on the Rx and Tx lines. A DC-DC converter supplies power to the transceivers.

Important features of the node 16 are:-
- 8 channel, 8-bit ADC,
- Non-volatile, re-writable memory area (256 byte EEPROM),
- Estimated 12k minimum of ROM (16kB or 32kB available depending on options).

The node places its associated luminaire in emergency mode by disconnecting the mains to the luminaire using the normally-closed relay 25 resident on the node. The fact that the relay is normally closed ensures that in the case of a node losing power, the luminaire continues to operate normally.

Visually, the node indicates, by means of the LED 39, its status, i.e.:
- Error : Flashing
- On Test : On
- Idle : Off

The communication protocol uses standard message formats for sending instructions and receiving data across the network. The protocol works on the assumption of a node receive address and a node transmit address. Each node on the network is assigned an unique receive address in the range 0 to 999. This address is then used by the node as an arbitration mask to determine whether or not a message on the bus is addressing that node. The control panel uses the identifier field as the "address field" when sending instructions to the nodes. When the node is sending information back to the control panel, it places its transmit address in the identifier field. The transmit address is its receive address plus 1,000, i.e. in the range 1,000 to 1,999. In addition several addresses above 1,999 are used for broadcast and configuration purposes.

The following message types are supported on the network :
- Commission Request
- Test Request
- Location Test
- Self-Test
- Program ID

The data field length is not fixed by the protocol. It depends on the information being transmitted. The first bytes contain information regarding node type and test type where appropriate. The control panel uses ID bytes in the data field when sending information to nodes to inform the node of the message type. Likewise, the node uses ID bytes in the data field when sending information to the control panel.

The operating environment of the network 1 is such that the cable will often be run close to utility (mains) lines. Thus the possibility exists that cross-talk from surges and transients on the utility lines may occur. It has been shown that under normal conditions an unshielded twisted pair cable will have a coupling impedance resulting in cross-talk of at least 10%. A 1000 volt surge on the power-line could result in 100Volt levels on the CAN bus which will damage transceivers. In addition, the network is floating and will thus act like an antenna for noise. In particular, high frequency common mode noise will find a return path through the primary transformer and cause significant common mode voltages on the bus. Shielding is therefore important.

In order to maximise shielding effectiveness the shield is grounded appropriately. Grounding at one end provides electrostatic shielding and prevents capacitive coupling. For inductive shielding from stray electromagnetic fields the shield is grounded at two ends. However in the case of large installations ground potential shifts will induce significant currents in the shield wire and a capacitive termination at one end (approx. 10nF) is provided. The following table sets out the cable specification.

| Cable Description | Shielded, Twisted Pair |
|---|---|
| Conductor Resistance | < 18.3Ω/km (16AWG) |
| Insulation | Polyethylene or PVC insulation |
| Shielding | Overlapping Foil screen with 20 |
| | AWG drain wire |
| Outer Insulation | PVC |
| Characteristic Impedance | 60- 180Ω |

The central controller includes a database which correlates physical location of luminaires with associated node identifiers. The luminaires may be of a wide variety of types, either self-contained or central-supplied.

The node 16 is universal in nature because it interfaces with the luminaire as follows:
(a) by sensing illumination intensity using the LDRs 32, and
(b) by measuring the voltage across the inverter circuit LED 36.

These sensed parameters are universal to all self-contained luminaires because the LED 26 is a regulatory requirement of emergency lighting luminaires and, of course, detection of light intensity is universal. At commissioning, values for (a) and (b) above are automatically stored as reference values so that the network is self-commissioning. Integrity of these values is verified by way of a separate manual check. After commissioning, all tests are carried out by comparing the sensed values with these reference values. If the luminaire has a halogen lamp, the node circuit measures the current supplied to the filament using the resistors 37.
An important aspect of use of the LDRs 32 is that they are used not only to detect if the lamp is operational, but also to monitor battery performance. This is achieved by operating the relay 25 to disconnect the circuit 21 from the mains 22 so that it enters emergency mode. The light intensity of the lamp is monitored over a period of time and this is used as an indicator of battery status. Thus, the LDRs 32 provide for universal monitoring of both the lamp and the battery, while monitoring the voltage across the LED 36 provides an indication of status of the inverter circuit.

The nodes 16 each store test routines which are applicable to the associated luminaire. These routines direct comprehensive testing based on the sensed inputs described above. The tests are activated by the CPU 2, thus providing a large degree of centralised control. Therefore, the user can set the test times with excellent flexibility. Typically, daily, weekly, or monthly patterns are used, each node having different tests carried out at different time intervals set by the user.

While the CPU 2 activates the tests by transmitting an activation signal for every test according to the default or user-inputted test times, the node circuits themselves actually perform the tests without reference to the CPU 2. This is because the node circuit microprocessor 30 is powerful enough and has sufficient non-volatile memory to do this work. The tests performed by the node circuits include self-commissioning, self-testing, and self-diagnosis. The network operation is therefore truly distributed. In addition, the node circuits do not transmit data to the CPU 2 unless a fault has been detected, and the data transmitted is diagnostic data indicating which of the lamp, the drive circuit, and the battery is faulty.

The CPU 2 is programmed to archive return data from the nodes by transmitting it to a separate microcomputer. Network reports can then be generated by the microcomputer.

In addition to the central processor stores default test times the user can add test times as desired. Security levels for user interaction ensure that the default test times are not tampered with.

The fact that only diagnostic data action commands are transmitted back to the central processor minimises spur bus traffic. It also ensures that the central processor can operate with a fast response time to provide very simple user instructions for repair of faults detected by the tests.

In more detail, the network is commissioned by programming the control panel with each node's details. Each node has a unique ID, in addition to a luminaire identifier (i.e. non-maintained, CBS node etc.), a 30 character description of its physical location, and a group number which will determine its test regime or test strategy. The CPU 2 stores this data in its network database.

Upon completion of the data entry sequence, each of the nodes is sent a commission command. In response, the node puts the luminaire into emergency mode for a duration of 3 hours. Each node measures its voltage levels, light output levels, discharge current levels and digital values, and stores these values in E²PROM (non-volatile memory). These values are determined to be reference values and are used to make comparative and diagnostic decisions on the luminaires when requested. Each node then responds to the control panel with a commission complete message.

Due to the fact that any node could reside on any one of ten CAN spurs, the commission message for each node is sent out on each channel. When the node responds, the correct channel is determined and stored as part of the node database, the control panel uses this information when communicating with the node for all future activities. This feature is of particular importance as it would complicate the job of the installer if each node ID had to be installed on a particular channel.

Once the network has been commissioned, the next stage is to set up the test strategy for the nodes. Each node is assigned to one of sixteen available groups, so that groups of emergency lights are tested, rather than having all going into emergency mode at once. Each of the sixteen groups has a unique test regime and all nodes in that group will follow that set regime. It is possible to select a default or custom test regime for each group.

The Default regime initiates testing on a daily, monthly, 6-monthly and annual time schedule, with increasing complexity. There is also a priority weighting system with annual taking priority over 6-monthly etc., the scheme working on a 28 day month. The intervals and duration of test, i.e. time in emergency mode are shown in the table below.

| Test Division | Test Interval | Test Duration |
|---|---|---|
| Daily | 1 Day | None |
| Monthly | 28 Days | 90 Sec. |
| 6-Monthly | 182 Days | 15 Min. |
| Annual | 364 Days | 3 Hours |

The custom regime allows the user to determine the number of test regimes i.e. from zero to four, the interval between tests and the duration of the tests. It is possible to have combinations of custom and default group regimes in any one network. The final stage of setting up the test regimes is to set the start date and time for each regime.

At each day rollover, the Control Panel builds a dynamic table for the regimes to be carried out that day and each regime is executed when the appropriate time occurs.

When a particular test regime becomes valid each node in the group is sequentially sent into test mode, by the transmission of a test message. The test message informs the node what test to carry out and the duration of the test. Upon completion of the test the node transmits a pass or fail message back to the control panel; if a fail message is sent it will also send diagnostic information on the luminaire detailing the cause of the failure. These results are stored in the results database for future printing or downloading. In addition, in the case of a failure, a fault LED is illuminated on the control panel, a volt-free relay is set and an audible indicator sounds.

In addition to the scheduling of regimes it is also possible to carry out off-line tasks on the network from the Control Panel, these are as follows.
- At any time it is possible to initiate any test sequence. It is possible to test by node, by group or to test all the nodes.
- It is possible to print out the results from the database by test, i.e. by node, group or for all nodes. It is also possible to print out results by status, i.e. nodes failed, nodes not responding, nodes commissioned etc.
- It is possible to isolate nodes so that they no longer take part in test regimes. This can be particularly useful when debugging faulty nodes. Nodes can be isolated individually, by group or all nodes. When isolated, nodes are not active on the bus, i.e. no messages will be sent to them by the control panel. Similarly nodes can be activated or "connected" again once the fault has been rectified.
- It is possible to adjust the tolerance of a node, a node group or all of the nodes. The tolerance is used by a node to determine the pass/fail status of its luminaire. This allows for variations in luminaire characteristics, due to manufacturing variability and ageing of batteries and lamps.
- There are two layers of password protection: a system password, to allow system testing and reporting, and a network password to allow system changes. It is possible to change or disable the system password, but not the network password.
- Time and date, which may be altered, are maintained on a Real Time Clock (RTC); the time being in 24-hour format.

Another important feature of operation of the central processor is that it polls all nodes to check that the nodes and the associated luminaires are active. Such an operation is carried out at frequent intervals. It will also be appreciated that the LED 39 is useful in providing a local visual indication of luminaire status. This is very helpful for maintenance engineers.

It will be appreciated that the invention provides a network which allows excellent versatility in the possible arrangements for connection of nodes by virtue of having multiple spurs extending from a communication circuit. Also, excellent versatility is achieved by virtue of the fact that the primary connections between the nodes and the luminaires are independent of luminaire manufacturer and type. The sensing parameters of light output and voltage across a status-indicating LED are universal. Another important feature is the fact that the network is self-commissioning. This both helps to ensure integrity of the test data and also simplifies the installation task. The fact that the nodes return only fault data to the central controller helps to minimise traffic on spurs and helps to allow control of a large number of luminaires. Also, this feature allows very simple instructions to be given to maintenance personnel. For example, a docket printed by the printer 5 may include very simple instructions which identify the location of the faulty luminaire and indicate that the lamp, the circuit, or the battery is faulty. In most instances the repair of the luminaire involves simply replacing the faulty component.

The invention is not limited to the embodiments described but may be varied in construction and detail.

## Claims

1. An emergency lighting network comprising a central controller comprising a central processor, non volatile memory, and a user interface, and a node at each of a plurality of luminaires, characterised in that,
the system further comprises a communication circuit (7) connected to a plurality of network spurs (8),
each network spur (8) comprises a plurality of nodes (16), each node being associated with a luminaire,
each node comprises a light sensor (32) for sensing luminaire lamp light output, and a processor (30) programmed to:-
perform a lamp test by comparing a sensed light level with a lamp test threshold,
perform a battery test by monitoring sensed light level over time as the luminaire battery is discharged across the lamp, and
process test data and generate diagnostic data indicating lamp and battery status;
the central controller comprises a database storing luminaire and node identification, type, and network location data, and the central processor (2) comprises means for outputting at the user interface diagnostic data indicating which luminaires are faulty and specifying if the lamp or the battery is faulty; and
the central controller comprises means for automatically activating the nodes (16) to perform tests.

2. A network as claimed in claim 1, wherein each node comprise means for testing a lamp drive circuit, and the central processor comprises means for indicating such a fault in the diagnostic data.

3. A network as claimed in claim 2, wherein said drive circuit test means comprises means (37) for sensing voltage drop across a drive circuit status indicator.

4. A network as claimed in any preceding claim, wherein each node processor (2) is programmed with self-commissioning routines for capturing test reference light values at installation.

5. A network as claimed in any preceding claim, wherein the central processor is programmed to poll all nodes to check that all nodes and associated luminaires are active.

6. A network as claimed in any preceding claim, wherein each node further comprises a current sensor (33, 30) for monitoring lamp current supply in luminaires within which light sensing is not possible.

7. A network as claimed in any preceding claim, wherein each node comprises means (39) for providing a local visual indication of luminaire status.

8. A network as claimed in any preceding claim, wherein the communication circuit and the nodes comprise means for communicating according to a Controller Area Network (CAN) protocol with a direct addressing scheme.
